Europäisches Patentamt

European Patent Office

Office européen des brevets

(11) Publication number: **0 470 343 A2**

# EUROPEAN PATENT APPLICATION

(21) Application number: **91109517.2**

(22) Date of filing: **10.06.91**

(51) Int. Cl.5: **A41H 43/00, B26F 1/38**

(30) Priority: **10.08.90 IT 8345690**

(43) Date of publication of application:
**12.02.92 Bulletin 92/07**

(84) Designated Contracting States:
**AT BE CH DE DK ES FR GB GR IT LI LU NL SE**

(71) Applicant: **CERIT SpA**
**Via Villanova di Sotto 9/A**
**I-33170 Pordenone(IT)**

(72) Inventor: **Meroni, Roberto**
**Viale Libertà 2/A**
**I-33170 Pordenone(IT)**

Inventor: **Beni, Stefano**
**Via Ugo Foscolo 5**
**I-33170 Pordenone(IT)**
Inventor: **Gerin, Umberto**
**Via San Giuliano 37**
**I-33170 Pordenone(IT)**
Inventor: **Lancerotto, Fabio**
**Via D. Compagni 2**
**I-20131 Milano(IT)**

(74) Representative: **Petraz, Gilberto Luigi**
**GLP S.r.l. Piazzale Cavedalis 6/2**
**I-33100 Udine(IT)**

(54) **Method of learning in cutting operations.**

(57) Method of learning in cutting operations, which includes before the actual cutting operations an operation (25) of learning on the cutting table itself (10) a profile to be cut and consists in displacing a cutting head (17) along the profile to be cut, in scanning the outline of the profile and in memorizing (26) the survey thus performed so as to be able to reproduce that profile in the successive step of cutting (28) the surface (12) in question, the learning (25) and cutting (28) operations taking place without removal of the surface (12) to be cut from a work platform (11) on which that surface (12) is positioned.

fig.1

EP 0 470 343 A2

This invention concerns a method of learning in cutting operations. To be more exact, the invention concerns a method which includes the scanning and memorizing of the profiles to be cut by means of the actual cutting unit, which is operated by hand by the machine operator directly on the cutting table.

The invention can be applied to the cutting of any surface and in particular to the cutting of textile surfaces and the like, such as hides, leather, etc.

The state of the art covers a plurality of processes and equipment suitable to cut automatically or by hand surfaces consisting of various materials.

In the field of textiles, to which we shall refer in the description hereinafter and with which can be associated like materials such as hides, cutting tables are well known which comprise cutting heads of a mechanical type or those using a jet of fluid or laser beams, etc.

The most up-to-date cutting tables perform the cutting of materials automatically in cooperation with separate systems that scan the models. These separate systems scan the image of the model to be reproduced and convert that image into electrical signals which are sent to a data processing unit.

The data processing unit is connected in turn to a cutting table, which proceeds to cut substantially at the same time or later, according to requirements, the surfaces corresponding to the model thus scanned.

These working methods can be applied satisfactorily to the cutting of actual textile materials but not equally well to the cutting of other materials such as hides.

In fact, hides include intrinsic peculiarities often related to defects (holes, cracks, etc.) which make unadvisable the separate scanning of models distant from the cutting equipment.

In other words, problems are involved in scanning the image of a model on another apparatus and in the transferring automatically the information thus obtained to the cutting table so as to cut a hide without direct scanning of the peculiarities of the hide.

This system entails the possibility of unsuitable cutting with costly resulting wastage of material.

The aim of the present applicant is to provide a method suitable to overcome the problems of the state of the art.

The invention is set forth in the main claim, while the dependent claims describe various features of the invention.

The method according to the invention arranges that, before the material is cut on the cutting table, an operation to learn the profile to be cut is carried out directly on the cutting table itself.

The learning operation is carried out preferably by manual methods by a machine operator by means of the cutting head itself, which is equipped with suitable scanning and displacement means and is moved to scan the profile to be cut directly on the material laid out on the work platform of the cutting table.

This profile is then reproduced in the successive step of cutting the material without displacement of the material; the profile can also be stored in a required manner in a connected central data processing unit.

The learning operation includes communications by means of a closed circuit between the machine operator, cutting head, cutting table control unit and the central data processing unit.

This lay-out simplifies the task of the machine operator considerably since he only needs to select from time to time the desired instructions by merely pressing a key.

The cutting head will be equipped advantageously with a joystick and a laser pointer device, with which it is especially easy to scan the profile to be cut, since the cutting head can follow delicately all the commands of the machine operator and enables the points of the cutting programme to be defined extremely accurately.

The learning operation is performed advantageously by scanning by points and consits of the following working steps:

- the cutting head is guided to the position for the beginning of the cutting cycle; this position is then fixed and is provided with the starting conditions (for instance, for mechanical cutting, blade up, blade down, etc.);
- the cutting head is displaced to follow and scan the profile to be cut until the cutting programme has been completed; during this scanning it is possible to dwell and define other working conditions (for instance, for mechanical cutting, blade up, blade down, sharpening, swift rotation, angle of application of blade, etc.);
- the cutting head is taken to its final position, which will normally, but not necessarily, be ths same as that of the beginning of the cycle, so as to close the work cycle;
- the cutting programme is memorized;
- a possible cutting simulation programme is performed;
- the actual cutting programme is carried out.

The above learning method is employed advantageously on cutting tables which comprise a support element secured to the table parallel to, and along the periphery of, one of the sides of the table, normally a longer side in the case of the usual rectangular tables, and the cutting head is positioned so as to be able to slide along the support element.

The table is also equipped with means to engage and displace the material to be cut; these means make the material slide on the work platform of the table in a direction at a right angle to the direction of sliding of the cutting head on the support element.

With such a lay-out it is possible to carry out readily the manual learning method, which, however, is not so easy, or indeed sometimes impossible, in the more frequent cases where the table comprises a cutting head able to slide lengthwise on a support element also able to slide in a direction at a right angle above the work platform on which the material to be cut is positioned immovably.

An automatic learning method can also be provided.

The method of the invention can be used with any cutting head, whether of a mechanical type or employing a jet of fluid or a laser beam or of any other type provided that it is equipped with manual actuation means or is pre-arranged for steering of another type.

The attached figures, which are given as a non-restrictive example, show the following:-
Figs.1, 2 and 3
give a plan view, frontal and side view diagrams respectively of a cutting table to which the method of the invention can be applied advantageously;
Fig.4
is a block diagram to show the learning method according to the invention.

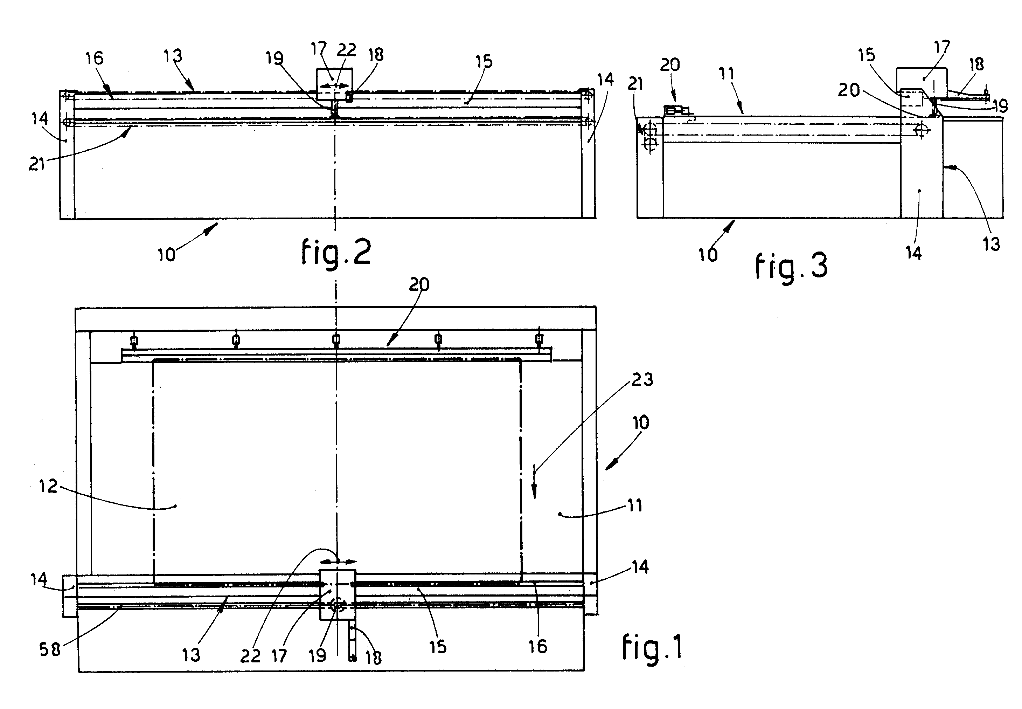

In Figs.1, 2 and 3 a cutting table 10, which advantageously has a rectangular conformation, comprises a work platform 11 on which a surface or surfaces 12 to be cut are positioned.

A bridge structure 13 consisting of uprights 14 and a crosswise support element 15 is secured parallel to one of the longer sides of the table 10 and near one of the outer edges of the same.

Suitable drive means, in this case a belt 16, make a cutting head 17, able to move straight to-and-fro on the support element 15, slide along the support element 15.

The cutting head 17, suitably guided to slide on guides of the support element 15, comprises a cutting tool referenced with 19 in the diagrams of Figs.1 to 3.

As we said above, the cutting tool 19 may be of various types, such as a mechanical blade or a nozzle for a fluid jet or a laser beam.

The cutting head 17 is equipped with an arm 18 with suitable control means to carry out by hand the cutting of the surfaces 12 by a machine operator.

The cutting table 10 comprises a unit 20 to engage the surfaces 12; this engagement unit 20 is moved along the work platform 11 in a direction at a right angle to the support element 15 of the cutting head 17.

The engagement unit 20 is actuated, for instance, by two lateral drive belts 21.

The cutting head 17 is therefore displaced in the directions of the arrows 22, whereas the surfaces 12 to be cut are displaced on the work platform 11 in the direction of the arrow 23.

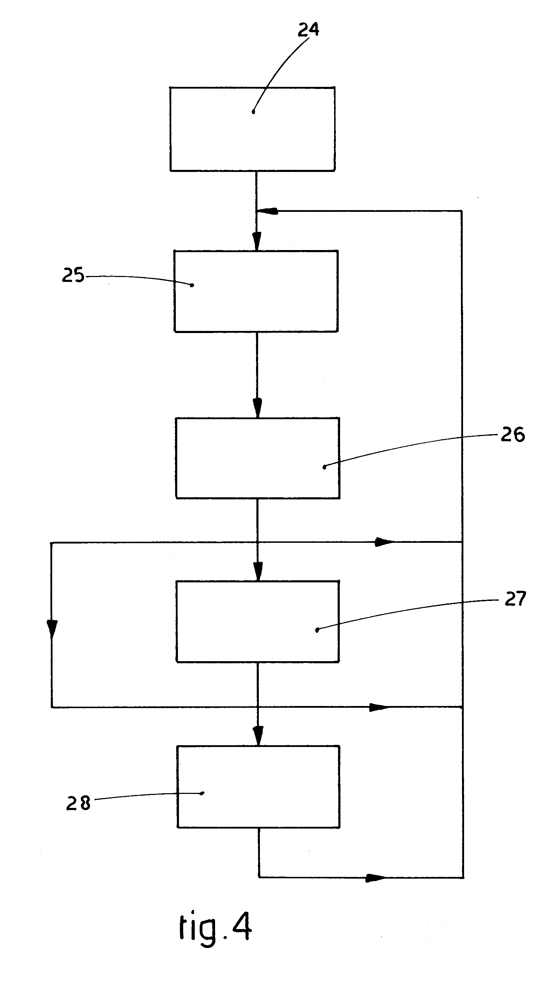

Fig.4 shows a general block diagram of a learning method according to the invention.

A starting step is referenced with 24 and corresponds to the so-called zero setting of the working axes; this setting generally takes place when the cutting table 10 is switched on, and corresponds to the placing of the cutting system in the conditions for beginning the operations.

A step 25 is the true learning step and can be selected by the operator by means of a suitable control located on the cutting head 17.

A control joystick of the cutting head 17, applied to the arm 18 of the head 17, and a laser pointer to scan the profile to be cut are activated advantageously in this step 25.

A step 26 corresponds to the storage of the scanned profile, which normally takes place in a volatile data storage of the unit that governs the cutting table 10.

The storage 26 in volatile data storage lasts until a new profile being learnt 25 is stored or until the previous profile is cancelled or the unit governing the cutting table 10 is switched off.

The storage 26 can also take place in the Random Access Memory (RAM) of the central data processing unit, for instance a Personal Computer, and will remain therein until the unit is switched off.

The storage can also take place in a magnetic memory (disk or floppy disk) of the central data processing unit and will remain there unitl the profile is cancelled arbitrarily.

The storage in RAM memory or magnetic memory enables the usual management of the profiles to be carried out which is typical of such methods.

A step 27 is optional and corresponds to the simulation of cutting a profile; such simulation can be effected to verify the path of the cutting head 17 and possibly to correct its movements according to cartesian axes.

Lastly, a step 28 corresponds to the actual cutting according to the methods previously stored.

In this step 28 all the working parameters such as speed of movement of the tool 19, the sharpening of the tool 19 and the number of cutting strokes if the tool is of a mechanical type, etc. can be conveniently changed on each occasion according to requirements.

## Claims

1. Method of learning in cutting operations, especially with textile surfaces (12) and the like such as hides, whereby the cutting takes place on a work platform (11) of a cutting table (10) on which the surfaces (12) to be cut are spread out and positioned, and the cutting is performed by a cutting head (17), the cutting table (10) being governed by its own control unit and by a central data processing unit, the method being characterized in that it includes, before the actual cutting operation, an operation, on the cutting table itself (10), to learn (25) the profile to be cut, this operation consisting in displacing the cutting head (17) along the profile to be cut, in scanning the outline of the profile and in memorizing (26) the survey thus performed so as to be able to reproduce that profile in the successive step of cutting (28) the surface (12) in question, the learning (25) and cutting (28) operations taking place without removal of the surface (12) to be cut from a work platform (11) on which that surface (12) is positioned.

2. Method as claimed in Claim 1, in which the learning operation (25) is carried out by hand by the machine operator by displacing the cutting head (17).

3. Method as claimed in Claim 1, in which the learning operation (25) is carried out with automatic methods.

4. Method as claimed in any claim hereinbefore, which is applied advantageously to cutting tables (10) comprising a support element (15) secured to the table (10) parallel to, and along the periphery of, one of the sides of the table (10), a longer side in the case of rectangular tables (10), the cutting head (17) being positioned so as to be able to slide (22) on the support element (15), such tables (10) comprising means (20) to engage and displace the surfaces to be cut (12) in a direction at a right angle (23) to the direction of sliding (22) of the cutting head (17) on the support element (15).

5. Method as claimed in any claim hereinbefore, in which the displacement of the cutting head (17) during the learning operation (25) is carried out by means of a joystick with which the cutting head (17) is equipped.

6. Method as claimed in any claim hereinbefore, in which the scanning of the profiles to be cut is achieved by means of a laser pointer with which the cutting head (17) is equipped.

7. Method as claimed in any claim hereinbefore, in which the cutting head (17) can be of any type (mechanical or using a fluid jet or a laser beam, etc.).

8. Method as claimed in any claim hereinbefore, in which the true learning step (25) is preceded by a step (24) of setting to zero the working axes.

9. Method as claimed in any claim hereinbefore, in which the memorizing (26) of the profile to be cut takes place in the volatile data storage of the unit that governs the cutting table (10).

10. Method as claimed in any of Claims 1 to 8 inclusive, in which the memorizing (26) of the profile to be cut takes place in the Random Access Memory (RAM) of the central data processing unit.

11. Method as claimed in any of Claims 1 to 8 inclusive, in which the memorizing (26) of the profile to be cut takes place in the magnetic memory of the central data processing unit.

12. Method as claimed in any claim hereinbefore, in which an operation (27) to simulate the cutting of the profile can be carried out after the memorizing (26) of the profile to be cut.

13. Method as claimed in any claim hereinbefore, in which all the working parameters pertaining to the cutting (28) can be varied from time to time according to requirements.

fig.3

fig.2

fig.1

fig.4